Europäisches Patentamt

European Patent Office

Office européen des brevets

(19)

(11) **EP 1 139 287 A2**

(12) **EUROPÄISCHE PATENTANMELDUNG**

(43) Veröffentlichungstag:
   **04.10.2001 Patentblatt 2001/40**

(51) Int Cl.[7]: **G06T 7/20**

(21) Anmeldenummer: **01105109.1**

(22) Anmeldetag: **02.03.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **29.03.2000 EP 00106697**

(71) Anmelder: **w + k VideoCommunication GmbH & Co. KG**
   **24118 Kiel (DE)**

(72) Erfinder: **Lück, Martin**
   **24109 Kiel (DE)**

(74) Vertreter: **Seemann, Ralph, Dr. Dipl.-Phys. et al Patentanwälte,**
   **Niedmers & Seemann,**
   **Van-der-Smissen-Strasse 3**
   **22767 Hamburg (DE)**

(54) **Verfahren zum Maskieren von Bereichen einer Folge digitaler Bilder**

(57) Die Erfindung betrifft ein Verfahren zum Maskieren von Bereichen einer Folge digitaler Bilder (10, 11) in Form von zweidimensionalen Datenfeldern mit in Zeilen (15) und Spalten (16) angeordneten Elementen (20, 30), die einen Intensitätswert repräsentieren.

Das erfindungsgemäße Verfahren ist durch die folgenden Verfahrensschritte gekennzeichnet:

a) Vorgeben von den Elementen (20, 30) zugeordneten Maskenwerten,

b) Vorgeben eines oberen Differenzgrenzwertes der Intensitätswerte,

c) Berechnen von Differenzwerten der Intensitätswerte der Elemente (20, 30) eines ersten Bildes (10) zu den zugehörigen Elementen (20, 30) eines zweiten Bildes (20),

d) Vergleichen der berechneten Differenzwerte mit dem oberen Differenzgrenzwert und Erhöhen der Maskenwerte um einen vorgebbaren Inkrementwert, wenn der jeweilige berechnete Differenzwert größer ist als der obere Differenzgrenzwert, und

e) Berechnen eines Wichtungswertes aus dem Differenzwert und dem Maskenwert, wobei Wichtungswerte, die kleiner als ein vorgebbarer Alarmwert sind, maskiert werden.

Fig. 1

**Beschreibung**

Die Erfindung betrifft ein Verfahren zum Maskieren von Bereichen einer Folge digitaler Bilder in Form von zweidimensionalen Datenfeldern mit in Zeilen und Spalten angeordneten Elementen, die einen Intensitätswert repräsentieren.

Bisherige Systeme zur Bewegungserkennung, beispielsweise bei einer Videoüberwachung, die auf der Analyse von Differenzbildern basieren, besitzen zur Vermeidung von Fehlalarmen meist eine sogenannte permanente Maske, die die Bildanalyse auf bestimmte Bereiche des Videobildes begrenzt, so daß störende Einflüsse nicht berücksichtigt werden. Derartige störende Einflüsse können beispielsweise Blätter und Zweige von Bäumen sein, die sich im Wind bewegen und entsprechende Schatten von bewegenden Zweigen oder beispielsweise eine stark befahrene Straße.

Der Nachteil einer derartigen permanenten Maske liegt darin begründet, daß diese manuell erstellt werden muß, was einen erheblichen Zeitaufwand erfordert. Zudem können dynamische Änderungen, wie z.B. die Bewegungen von Schatten im Laufe eines Tages nicht berücksichtigt werden oder müssen durch entsprechend großzügig dimensionierte Masken Berücksichtigung finden, wobei dann allerdings ein kleinerer Bereich des Videobildes Alarmfunktionen zugänglich ist. Ferner erzwingt eine Neuausrichtung einer Kamera eine manuelle Änderung der permanenten Maske. Dieses ist insbesondere bei sich verschwenkenden Kameras sehr störend.

Die Aufgabe der vorliegenden Erfindung ist es, ein Verfahren anzugeben, mit dem automatisch Bereiche von Videobildern maskiert werden können. Hierbei soll das Verfahren eine sich selbst generierende und vorzugsweise auch wieder automatisch abschwächende Maske erzeugen, und zwar bei permanenten Bildänderungen über einen gewissen Zeitraum. Das Verfahren soll hierbei möglichst wenig Rechenaufwand erfordern.

Gelöst wird diese Aufgabe durch ein Verfahren zum Maskieren von Bereichen einer Folge digitaler Bilder in Form von zweidimensionalen Datenfeldern mit in Zeilen und Spalten angeordneten Elementen, die einen Intensitätswert repräsentieren, das die folgenden Verfahrensschritte umfaßt:

a) Vorgeben von den Elementen zugeordneten Maskenwerten,

b) Vorgeben eines oberen Differenzgrenzwertes der Intensitätswerte,

c) Berechnen von Differenzwerten der Intensitätswerte der Elemente eines ersten Bildes zu den zugehörigen Elementen eines zweiten Bildes,

d) Vergleichen der berechneten Differenzwerte mit dem oberen Differenzgrenzwert und Erhöhen der Maskenwerte um einen vorgebbaren Inkrementwert, wenn der jeweilige berechnete Differenzwert größer ist als der obere Differenzgrenzwert, und

e) Berechnen eines Wichtungswertes aus dem Differenzwert und dem Maskenwert, wobei Wichtungswerte, die kleiner als ein vorgebbarer Alarmwert sind, maskiert werden.

Bei dieser erfindungsgemäßen Lösung, bei der insbesondere Differenzbilder erzeugt werden, generiert sich eine adaptive Maske selbständig, um so Fehlalarme durch Störeinflüsse, wie beispielsweise sich dauernd bewegende Bäume, die sich im Wind wiegen, zu vermeiden. Hierbei werden diejenigen Bildbereiche zweier aufeinanderfolgender Videobilder, deren Differenzwerte von Intensitätswerten dieser Bildbereiche oberhalb eines oberen Differenzgrenzwertes liegen, dazu verwendet, daß der erste Maskenwert, der Maske, insbesondere adaptiven Maske, um einen Inkrementwert erhöht wird, so daß die Differenzwerte der Intensitätswerte in Abhängigkeit der Maskenwerte gewichtet werden. Durch diese Wichtung ergibt sich je nach Größe des jeweiligen Maskenwertes und Größe der Intensitätsunterschiede der entsprechenden Bereiche der Bilder eine Alarmfunktion oder eben, wenn der Maskenwert ausreichend hoch ist, eine Maskierung bzw. ein Nicht-Auslösen eines Alarms. Damit werden diejenigen Bildbereiche, in denen sich über einen gewissen Zeitraum permanent Bildänderungen ergeben, automatisch ausmaskiert, so daß diese Bildänderungen für Alarme nicht mehr berücksichtigt werden.

Vorzugsweise werden die vorgenannten Verfahrensschritte c) bis e) bis zu einer Abbruchbedingung wiederholt. Durch diese vorzugsweise Ausgestaltung des Verfahrens kann - solange ein gewisser Bereich überwacht wird - das erfindungsgemäße Verfahren Verwendung finden. Eine Abbruchbedingung ist beispielsweise das manuelle Abbrechen der Videoüberwachung, ein Absturz des Überwachungssystems, eine Beschädigung der entsprechenden Videokamera, ein Ablösen der Stecker der Videokamera, ein Stromausfall oder dgl. Insbesondere wird vorzugsweise eine Alarmfunktion ausgelöst, wenn eine Abbruchbedingung erfüllt ist.

Wenn vorzugsweise die Elemente Datenfelder mit n x m Bildpunkten sind, wobei n und m ≥ 1 und ganze Zahlen sind, ist es bevorzugterweise möglich, den Rechenaufwand zu verringern. Vorzugsweise sind die Bildpunkte RGB-Tripel, so daß der Abstand eines jeden Bildpunktes im Farbraum einfach berechnet und aufsummiert werden kann. Vorzugsweise sind die Bildpunkte YKV-Tripel.

Wenn vorzugsweise der Differenzwert, der zu dem jeweiligen Element zugeordneten Bildpunkten gemittelt wird, kann das Verfahren mit relativ wenig Rechenaufwand durchgeführt werden. Eine Mittlung findet beispielsweise durch Addition der Abstände eines jeden Pixels im Farbraum und Division der Anzahl der Bildpunkte pro Element statt.

Wenn vorzugsweise als weiterer Verfahrensschritt ein Helligkeitsausgleich durchgeführt wird, ist es möglich, Helligkeitsschwankungen des gesamten Videobildes bei Vergleich eines Videobildes mit dem folgenden Videobild derart auszugleichen, daß kein Fehlalarm ausgelöst wird, so daß die adaptive Maske weiterhin funktionsfähig ist. Entsprechende Helligkeitsunterschiede zwischen aufeinanderfolgenden Bildern kommen häufig in Multiplexverfahren vor, bei denen mehrere verschiedene Videokameras Verwendung finden, wie beispielsweise vier, bei denen reihum hintereinander die dem Überwachungssystem übermittelten Bilder der vier Kameras verarbeitet werden. Die Verarbeitung hat hierbei beispielsweise die Reihenfolge: Bild von Kamera 1, Bild von Kamera 2, Bild von Kamera 3 und Bild von Kamera 4 und dann wieder Bild von Kamera 1, Bild von Kamera 2 usw. Hierbei werden natürlich nur die Differenzbilder der jeweiligen Kameras zueinander verarbeitet und nicht die Differenzbilder unterschiedlicher Kameras. Vorzugsweise wird der Helligkeitsausgleich nach Verfahrensschritt c) durchgeführt.

Vorzugsweise wird ein unterer Differenzgrenzwert vorgegeben, so daß es auch möglich ist, daß sich die Maske automatisch wieder abschwächt sobald die permanenten Bildänderungen nicht mehr vorhanden sind. Hierzu ist insbesondere vorzugsweise als weiterer Verfahrensschritt vorgesehen, daß die berechneten Differenzwerte mit dem unteren Differenzgrenzwert verglichen werden und die Maskenwerte um einen vorgebbaren Dekrementwert verringert werden, wenn der jeweilige berechnete Differenzwert kleiner als der untere Differenzgrenzwert ist.

Vorzugsweise wird die Berechnung des Wichtungswertes mit der Formel

$$d_{iw} = d_i/M_{max} \times (M_{max} - M_i)$$

durchgeführt, wobei $d_{iw}$ der Wichtungswert, $d_i$ der Differenzwert, $M_{max}$ ein relativ hoher vorgebbarer Maskenwert und $M_i$ der Maskenwert ist. Durch diese vorzugsweise Ausgestaltung des Verfahrens ist eine bevorzugte Abhängigkeit des Wichtungswertes von dem Differenzwert, dem größten anzunehmenden Maskenwert und dem aktuellen Maskenwert ersichtlich. Der Maskenwert $M_{max}$ ist eine relativ hohe Intensität eines Makroblockes von n x m RGB-Tripeln beispielsweise. Bei einer Farbtiefe von 256 und n und m = 8 kann $M_i = 64 \times (3 \times 255^2)^{1/2}$ sein. $M_{max}$ wird beispielsweise auf 1000 vorgegeben.

Vorzugsweise wird der größte Wichtungswert ermittelt und eine Alarmfunktion ausgelöst, wenn der größte Wichtungswert größer als ein vorgebbarer Alarmwert ist. Die Ermittlung des größten Wichtungswertes erfolgt durch einen bekannten Algorithmus über sämtliche Wichtungswerte. Die Alarmfunktion, die ausgelöst wird, kann hierbei insbesondere in Bereichen ausgelöst werden, die nicht maskiert sind und auch in Bereichen, deren Maske noch keinen ausreichend hohen Maskenwert in Relation zu einem jeweiligen Differenzwert bzw. Wichtungswert aufweist.

Vorzugsweise ist ein Videoüberwachungssystem mit einer sich gemäß den vorstehend genannten Verfahrensschritten anpassenden Maske versehen.

Vorzugsweise ist ein Bewegungserkennungssystem mit wenigstens einer Videokamera, einer Schnittstelle zur Übertragung der von der Videokamera erzeugten Videobilder auf einen Computer und Mittel zur Ausführung der vorgenannten Verfahrensschritte versehen.

Vorzugsweise umfaßt ein Computerprogrammerzeugnis, das direkt in den Arbeitsspeicher eines digitalen Computers ladbar ist, Teile kodierter Software zur Ausführung der vorgenannten Verfahrensschritte, wenn das Erzeugnis auf dem Computer läuft.

Vorzugsweise ist ein auf einem von einem Computer nutzbaren Speichermedium gespeichertes Computerprogrammerzeugnis, umfassend computerlesbare Programmschritte, die einen Computer dazu veranlassen, die vorgenannten Verfahrensschritte auszuführen, vorgesehen.

Die Erfindung wird ferner durch ein Verfahren zum Maskieren von Bereichen einer Folge digitaler Bilder in Form von zweidimensionalen Datenfeldern mit in Zeilen und Spalten angeordneten Elementen, die einen Intensitätswert repräsentieren, gelöst, das die folgenden Verfahrensschritte umfaßt:

k) Berechnen eines Differenzwertes durch Subtrahieren des Intensitätswertes eines Elements eines ersten Bildes von dem zugehörigen Element eines dem ersten Bild folgenden zweiten Bild,

l) Markieren von ersten Bereichen auf der Folge von Bildern, deren Differenzwert einen vorgebbaren ersten Wert überschreitet und Speichern der ersten Bereiche,

m) Wiederholen des Schritts k) mit dem zweiten Bild und einem dem zweiten Bild folgenden dritten Bild, und

n) Maskieren der Bereiche der Folge von Bildern, die gleiche Koordinaten der Elemente in den Datenfeldern aufweisen.

Vorzugsweise werden zur fortwährenden Maskierung der Bilder zweite Bereiche des dritten Bildes markiert und gespeichert, bei denen der Differenzwert den vorgebbaren ersten Wert überschreitet. Vorzugsweise werden die Verfahrensschritte wiederholt, bis eine Abbruchbedingung erfüllt ist. Hierbei gelten insbesondere die vorne genannten Abbruchbedingungen als entsprechende Abbruchbedingungen. Vorzugsweise wird/werden in Schritt k) das Element oder die Elemente mit den gleichen Koordinaten auf den jeweiligen Bildern bzw., die am gleichen Ort auf den Bildern sind, verarbeitet. Vorzugsweise ist der erste Wert automatisch an die sich ergebenden Helligkeitsschwankungen bzw. Intensitätsschwankungen anpaßbar.

Wenn vorzugsweise als weiterer Verfahrensschritt ein Helligkeitsausgleich durchgeführt wird, können Helligkeitsschwankungen des gesamten Bildes ausgeglichen werden.

Vorzugsweise geschieht das Maskieren erst nach p aufeinanderfolgenden Bildern, wobei bei jedem der aufeinanderfolgenden Bilder der Differenzwert in dem zu maskierenden Bereich wenigstens in q Fällen den ersten Wert übersteigt, und wobei p und q ganze Zahlen sind und wobei $p \geq q - 1$ und $p \geq 3$ ist und wobei p und q vorgebbar sind. Durch diesen vorzugsweise durchzuführenden Verfahrensschritt kann die Schnelligkeit der adaptiven Maske und die Empfindlichkeit eingestellt werden.

Wenn vorzugsweise ein vorgebbarer zweiter Wert vorgesehen ist und wenn bei Überschreiten des zweiten Wertes durch den Differenzwert einer Alarmfunktion ausgelöst wird, ist eine Auslösung eines Alarms auch noch bei Vorsehen einer Maske möglich.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigt:

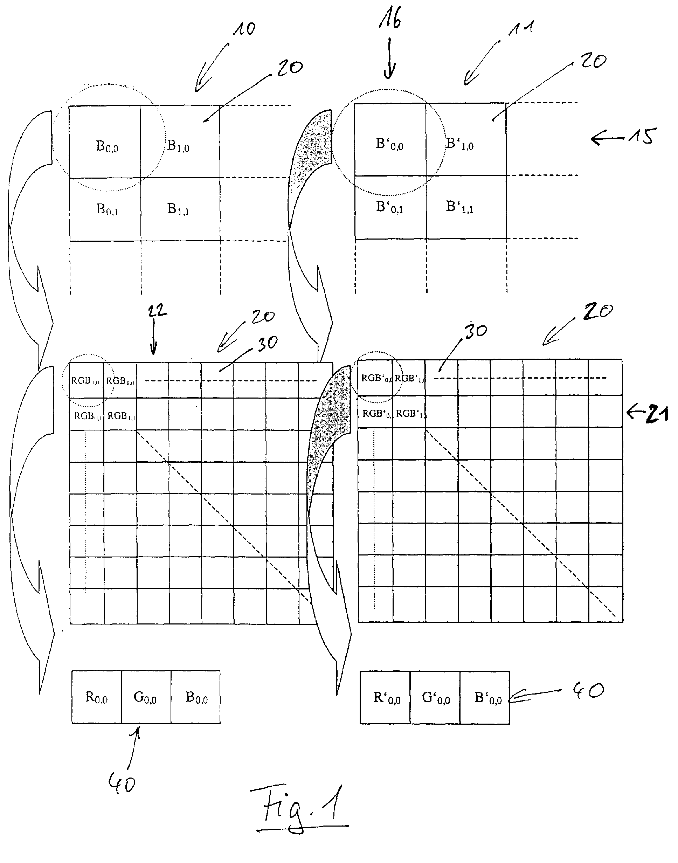

Fig. 1    schematisch den Aufbau von Videobildern.

In der folgenden Figur sind jeweils gleiche oder entsprechende Teile mit denselben Bezugszeichen bezeichnet.

Fig. 1 zeigt schematisch den Aufbau von zwei Videobildern. Das erste Videobild 10 ist links oben angedeutet und das zweite Videobild 11 rechts oben. Die Videobilder 10 und 11 sind in Makroblöcke 20 aufgeteilt, die in Zeilen 15 und Spalten 16 angeordnet sind. Die Koordinaten der Makroblöcke sind 0,0 bis 24,18. Die Videobilder sind also in 24 x 18 Makroblöcke, d.h. 432 Makroblöcke aufgeteilt.

Ein Videobild der FBAS-Norm umfaßt 704 x 288 Pixel oder Bildpunkte 30. Um den Rechenaufwand zu verringern, werden die Videobilder auf eine Größe von 192 x 144 Pixel oder Bildpunkte 30 skaliert. Die Makroblöcke 20 umfassen 8 x 8 Bildpunkte 30, wie in der Mitte der Fig. 1 links und rechts jeweils angedeutet ist. Auch die Makroblöcke 20 umfassen Zeilen 21 und Spalten 22, die eine Indexierung bzw. eine Koordinatenangabe der Bildpunkte 30 ermöglicht. Die Bildpunkte 30 stellen RGB-Tripel 40 dar.

Die RGB-Tripel umfassen eine rote Intensität, eine grüne Intensität und eine blaue Intensität, die jeweils zwischen 0 und 255 in diesem Beispiel variieren können. Sofern R, G und B sämtliche 0 sind, ergibt sich ein schwarzer Bildpunkt 30. Sofern R, G und b jeweils 255 sind, ergibt sich ein weißer Bildpunkt 30. Bei Werten zwischen diesen Bereichen ergeben sich unterschiedliche Farben. die Pfeile in Fig. 1 stellen eine Art Vergrößerung der jeweiligen Bereiche der Videobilder dar.

Die Bewegungserkennung gemäß diesem Ausführungsbeispiel basiert auf einem Differenzbildverfahren. Dazu werden in einem zeitlichen Abstand zwei Videobilder 10 und 11 bearbeitet und um den Rechenaufwand zu verringern auf eine Größe von 192 x 144 Pixel skaliert. Als nächster Schritt werden nun für jeweils 8 x 8 Pixel große Blöcke, die als Makroblöcke 20 oder $D_{xy}$ bezeichnet werden, der Abstand eines jeden Pixels im Farbraum berechnet und aufsummiert. Hierbei ist insbesondere die Differenz der jeweiligen Werte eines Pixels im Differenzraum gemeint. Dieser berechnet sich beispielsweise wie folgt:

$$D_{x,y}=((R_{x,y}-R'_{x,y})^2+(G_{x,y}-G'_{x,y})^2+(B_{x,y}-B'_{x,y})^2)^{\frac{1}{2}}.$$

Hierbei sind die R,G und B Werte die RGB-Werte des ersten Bildes und die R', G' und B' Werte die RGB-Werte des zweiten Bildes. x und y stellen die Koordinaten dar. Diese Werte werden dann aufsummiert und durch 64 geteilt, so daß eine mittlere Differenz bzw. ein Differenzwert der Intensitätswerte des i-ten Makroblockes 20 ergibt. Dieser Zahlenwert wird $d_i$ genannt. Der Differenzwert $d_i$ ist ein Maß der Änderungen der Intensitäten der jeweiligen Farben der Pixel zwischen zwei korrespondierenden Makroblöcken der Videobilder 10 und 11.

Um globale Helligkeitsschwankungen zwischen den Videobildern 10 und 11 auszugleichen, wird eine mittlere Differenz dM aller Makroblöcke ermittelt und von jedem Differenzwert $d_i$ subtrahiert. Die Berechnung der mittleren Differenz dM aller Makroblöcke geschieht wie folgt:

$$dM = 1/432 \times \text{Summe} (D_i),$$

wobei i zwischen 0 und 431 liegt. Der automatische Helligkeitsausgleich ergibt sich durch eine Zuordnung eines neuen berechneten Differenzwertes und der Subtraktion der mittleren Differenz dM von dem vorherigen Differenzwert $d_i$ ($d_i := d_i - dM$). Der automatische Helligkeitsausgleich kann als eine Art Hochpaß dargestellt sein, der insbesondere beim Umschalten von Videobildern im Multiplexverfahren Verwendung finden kann, um die dort häufiger auftretenden Helligkeitsschwankungen zu verringern. Als nächstes wird ein Maskenwert $M_i$ wie folgt berechnet, wobei der Maskenwert $M_i$ insbesondere adaptiv ist:

Wenn einer der Differenzwerte $d_i$ einen vorgegebenen Schwellwert $d_{Tu}$ überschreitet, erhöht sich $M_i$

um einen vorgegebenen Wert $M_{inc}$. Bei Unterschreiten eines zweiten unteren Schwellwertes $d_{Tl}$ verringert sich $M_i$ um $M_{dec}$. $M_i$ kann minimal 0 werden oder aber maximal $M_{max}$. $M_{max}$ wird beispielsweise auf 1000 festgelegt.

Als nächstes wird ein gewichteter Differenzwert des i. Makroblockes 20 ermittelt bzw. ein Wichtungswert des i. Makroblockes. Dieser wird wie folgt berechnet:

$$d_{iw} = d_i/M_{max} \times (M_{max} - M_i)$$

In einem bevorzugten Ausführungsbeispiel der vorliegenden Erfindung wird daraufhin der größte gewichtete Differenzwert ermittelt und mit einem vorgebbaren Schwellwert $d_{Talarm}$ verglichen. Überschreitet der gewichtete Differenzwert diesen Schwellwert, so wird dies als Bewegung interpretiert und dem System als Bewegungsalarm gemeldet. In diesem Ausführungsbeispiel kann dann beispielsweise ein Fadenkreuz auf dem Bild bzw. dem Bildschirm dargestellt werden, deren Fäden sich an der Koordinate kreuzen, die dem Ort des größten gewichteten Differenzwertes entspricht. Das Fadenkreuz bewegt sich bei aufeinanderliegenden Bildern bevorzugterweise auf den Ort, der dem größten gewichteten Differenzwert entspricht.

Alternativ hierzu können in einem anderen Ausführungsbeispiel sämtliche gewichteten Differenzwerte mit dem Schwellwert $d_{Talarm}$ verglichen werden und überall dort, wo der gewichtete Differenzwert diesen Schwellwert überschreitet, eine Markierung auf dem Videobild angezeigt werden.

Durch geeignete Wahl der Parameter $d_{Tu}$, $d_{Tl}$, $d_{Talarm}$, $M_{inc}$ und $H_{dec}$, die von einem auf dem einschlägigen Gebiet tätigen Fachmann ohne weiteres durchgeführt werden kann, läßt sich die Geschwindigkeit, mit der sich die adaptive Maske auf- und wieder abbaut, sowie die Stärke der Störung bzw. der Intensitätsunterschied, der notwendig ist, damit eine Maske sich aufbaut und die Empfindlichkeit der Alarmfunktion in weiten Grenzen einstellen. Auf diese Weise werden mit einer entsprechenden erfindungsgemäßen und bevorzugten adaptiven Maske wirksam Fehlalarme unterdrückt.

Insbesondere ist es vorzugsweise vorgesehen, auch eine Mustererkennung durchzuführen, so daß bei sich verschwenkenden Kameras gleiche Muster in aufeinanderfolgenden Bildern erkennbar sind und die sich ausbildende oder die ausgebildete Maske sich gemäß der Bewegung der Schwenkkamera über die Bilder mit bewegt. Eine Berechnung der Geschwindigkeit dieser Bewegung kann auch über die Geschwindigkeit des Verschwenkens der Kamera gekoppelt mit einer Abstandsmessung oder Vorgabe der auszumaskierenden Objekte geschehen.

Bezugszeichenliste

| | |
|---|---|
| 10 | erstes Videobild |
| 11 | zweites Videobild |
| 15 | Zeile |
| 16 | Spalte |
| 20 | Makroblock |
| 21 | Zeile |
| 22 | Spalte |
| 30 | Bildpunkt |
| 40 | RGB-Tripel |

**Patentansprüche**

1. Verfahren zum Maskieren von Bereichen einer Folge digitaler Bilder (10, 11) in Form von zweidimensionalen Datenfeldern mit in Zeilen (15) und Spalten (16) angeordneten Elementen (20, 30), die einen Intensitätswert repräsentieren, **gekennzeichnet durch** die folgenden Verfahrensschritte:

   a) Vorgeben von den Elementen (20, 30) zugeordneten Maskenwerten,

   b) Vorgeben eines oberen Differenzgrenzwertes der Intensitätswerte,

   c) Berechnen von Differenzwerten der Intensitätswerte der Elemente (20, 30) eines ersten Bildes (10) zu den zugehörigen Elementen (20, 30) eines zweiten Bildes (11),

   d) Vergleichen der berechneten Differenzwerte mit dem oberen Differenzgrenzwert und Erhöhen der Maskenwerte um einen vorgebbaren Inkrementwert, wenn der jeweilige berechnete Differenzwert größer ist als der obere Differenzgrenzwert, und

   e) Berechnen eines Wichtungswertes aus dem Differenzwert und dem Maskenwert, wobei Wichtungswerte, die kleiner als ein vorgebbarer Alarmwert sind, maskiert werden.

2. Verfahren nach Anspruch 1, **dadurch gekennzeichnet, daß** die Verfahrensschritte c) bis e) bis zu einer Abbruchbedingung wiederholt werden.

3. Verfahren nach Anspruch 1 und/oder 2, **dadurch gekennzeichnet, daß** die Elemente (20, 30) Datenfelder mit n x m Bildpunkten (30) sind, wobei n und m $\geq$ 1 und ganze Zahlen sind.

4. Verfahren nach Anspruch 3, **dadurch gekennzeichnet, daß** die Bildpunkte (30) RGB-Tripel (40) sind.

**5.** Verfahren nach einem oder mehreren der Ansprüche 1 bis 4, **dadurch gekennzeichnet, daß** der Differenzwert jedes Elements (20, 30) aus den Differenzwerten der zu dem jeweiligen Element (20, 30) zugeordneten Bildpunkten (30) gemittelt wird.

**6.** Verfahren nach einem oder mehreren der Ansprüche 1 bis 5, **dadurch gekennzeichnet, daß** als weiterer Verfahrensschritt ein Helligkeitsausgleich durchgeführt wird.

**7.** Verfahren nach Anspruch 6, **dadurch gekennzeichnet, daß** der Helligkeitsausgleich nach Verfahrensschritt c) durchgeführt wird.

**8.** Verfahren nach einem oder mehreren der Ansprüche 1 bis 7, **dadurch gekennzeichnet, daß** ein unterer Differenzgrenzwert vorgegeben wird.

**9.** Verfahren nach Anspruch 8, **dadurch gekennzeichnet, daß** als weiterer Verfahrensschritt die berechneten Differenzwerte mit dem unteren Differenzgrenzwert verglichen werden und die Maskenwerte um einen vorgebbaren Dekrementwert verringert werden, wenn der jeweilige berechnete Differenzwert kleiner als der untere Differenzgrenzwert ist.

**10.** Verfahren nach einem oder mehreren der Ansprüche 1 bis 9, **dadurch gekennzeichnet, daß** die Berechnung des Wichtungswertes mit der Formel

$$d_{iw} = d_i/M_{max} \times (M_{max} - M_i)$$

durchgeführt wird, wobei $d_{iw}$ der Wichtungswert, $d_i$ der Differenzwert, $M_{max}$ ein relativ großer vorgebbarer Maskenwert und $M_i$ der Maskenwert ist.

**11.** Verfahren nach einem oder mehreren der Ansprüche 1 bis 10, **dadurch gekennzeichnet, daß** der größte Wichtungswert ermittelt wird und **daß** eine Alarmfunktion ausgelöst wird, wenn der größte Wichtungswert größer als ein vorgebbarer Alarmwert ist.

**12.** Videoüberwachungssystem mit einer sich nach einem Verfahren nach einem oder mehreren der Ansprüche 1 bis 11 anpassenden Maske.

**13.** Computerprogrammerzeugnis, das direkt in den Arbeitsspeicher eines digitalen Computers ladbar ist, umfassend Teile kodierter Software zur Ausführung der Verfahrensschritte gemäß einem oder mehreren der Ansprüche 1 bis 11, wenn das Erzeugnis auf dem Computer läuft.

**14.** Auf einem von einem Computer nutzbaren Speichermedium gespeichertes Computerprogrammerzeugnis umfassend computerlesbare Programmschritte, die einen Computer dazu veranlassen, die Verfahrensschritte gemäß einem oder mehreren der Ansprüche 1 bis 11 auszuführen.

**15.** Verfahren zum Maskieren von Bereichen einer Folge digitaler Bilder (10, 11) in Form von zweidimensionalen Datenfeldern mit in Zeilen (15) und Spalten (16) angeordneten Elementen (20, 30), die einen Intensitätswert repräsentieren, **gekennzeichnet durch** die folgenden Verfahrensschritte:

k) Berechnen eines Differenzwertes **durch** Subtrahieren des Intensitätswertes eines Elements (20, 30) eines ersten Bildes (10) von dem zugehörigen Element (20, 30) eines dem ersten Bild (10) folgenden zweiten Bild (11),

l) Markieren von ersten Bereichen auf der Folge von Bildern (10, 11), deren Differenzwert einen vorgebbaren ersten Wert überschreitet und Speichern der ersten Bereiche,

m) Wiederholen des Schritts k) mit dem zweiten Bild (11) und einem dem zweiten Bild (11) folgenden dritten Bild, und

n) Maskieren der markierten Bereiche der Folge von Bildern (10, 11), die gleiche Koordinaten der Elemente (20, 30) in den Datenfeldern aufweisen.

**16.** Verfahren nach Anspruch 15, **dadurch gekennzeichnet, daß** zur fortwährenden Maskierung der Bilder (10, 11) zweite Bereiche des dritten Bildes markiert und gespeichert werden, bei denen der Differenzwert den vorgebbaren ersten Wert überschreitet.

**17.** Verfahren nach Anspruch 15 und/oder 16, **dadurch gekennzeichnet, daß** die Verfahrensschritte wiederholt werden, bis eine Abbruchbedingung erfüllt ist.

**18.** Verfahren nach einem oder mehreren der Ansprüche 15 bis 17, **dadurch gekennzeichnet, daß** als weiterer Verfahrensschritt ein Helligkeitsausgleich durchgeführt wird.

**19.** Verfahren nach einem oder mehreren der Ansprüche 15 bis 18, **dadurch gekennzeichnet, daß** das Maskieren erst nach p aufeinanderfolgenden Bildern (10, 11) geschieht, wobei bei jedem der aufeinanderfolgenden Bilder (10, 11) der Differenzwert in dem zu maskierenden Bereich wenigstens in q Fällen den ersten Wert übersteigt, und wobei p und q ganze Zahlen sind, wobei $p \geq q-1$ und $p \geq 3$ ist und wobei p und q vorgebbar sind.

20. Verfahren nach einem oder mehreren der Ansprüche 15 bis 19, **dadurch gekennzeichnet, daß** ein vorgebbarer zweiter Wert vorgesehen ist und **daß** bei Überschreiten des zweiten Wertes durch den Differenzwert eine Alarmfunktion ausgelöst wird.

Fig. 1